# EUROPEAN PATENT SPECIFICATION

(11) **EP 4 438 279 B1**
(45) Date of publication and mention of the grant of the patent: **06.05.2026**
(21) Application number: 24158287.3
(22) Date of filing: 19.02.2024
(51) Int. Cl.: B29C 73/16

(54) **BOTTLE SET AND PUNCTURE REPAIR KIT**
FLASCHENSATZ UND PUNKTIONSREPARATURKIT
ENSEMBLE BOUTEILLE ET KIT DE RÉPARATION DE CREVAISON

(30) Priority: 27.03.2023 JP 2023050285
(43) Date of publication of application: 02.10.2024
(73) Proprietor: Sumitomo Rubber Industries, Ltd., Kobe-shi, Hyogo 651-0072 (JP)
(72) Inventor: MAKI, Takashi, Kobe-shi 651-0072 (JP)
(74) Representative: Manitz Finsterwald Patent- und Rechtsanwaltspartnerschaft mbB

(56) References cited:
- EP-A1- 4 257 346
- EP-A1- 4 261 023
- US-B2- 8 631 840

## Description

### BACKGROUND OF THE INVENTION

### Field of the Invention

The present invention relates to a bottle set used for filling a punctured object with a puncture repair liquid and compressed air, and a puncture repair kit including the bottle set.

### Background Art

Hitherto, a puncture repair kit for repairing a punctured tire has been known. For example, Japanese Laid-Open Patent Publication No. 2017-056662 proposes a puncture repair kit for repairing a punctured tire by sequentially injecting a puncture repair liquid and compressed air into the punctured tire using compressed air from a compressor.

However, the puncture repair kit of Japanese Laid-Open Patent Publication No. 2017-056662 tends to take a long time to close a punctured part with the puncture repair liquid, since the compressed air is injected after the puncture repair liquid is injected.

A bottle set in accordance with the preamble of claim 1 is known from US 8,631,840 B2. Related bottle sets are described in EP 4 257 346 A1 (document according to Article 54(3) EPC) and EP 4 261 023 A1 (document according to Article 54(3) EPC).

The present invention has been made in view of the above circumstances, and a main object of the present invention is to provide a bottle set and a puncture repair kit for performing puncture repair in a short time.

### SUMMARY OF THE INVENTION

The present invention is directed to a bottle set used for filling a punctured object with a puncture repair liquid and compressed air, the bottle set including: a container for containing the puncture repair liquid; a cap member attached to the container; and an adapter member attachable between the container and the cap member, wherein the cap member has a first flow passage for supplying the compressed air, and a second flow passage for discharging the puncture repair liquid and the compressed air, the adapter member has a mixing chamber for producing a mixture of the puncture repair liquid and the compressed air when the adapter member is attached to the cap member, and a third flow passage for supplying the puncture repair liquid to the mixing chamber, and the first flow passage supplies the compressed air into the container when the cap member is directly attached to the container, and supplies the compressed air into the mixing chamber when the cap member is attached to the container via the adapter member. The container includes an opening portion to which the cap member or the adapter member is attached. The opening portion has a film for holding the puncture repair liquid in an airtight manner. The cap member has a first breaking portion which breaks the film when the cap member is attached to the opening portion. The adapter member has a second breaking portion which breaks the film when the adapter member is attached to the opening portion. An opening area of the film broken by the first breaking portion or the second breaking portion is larger than a cross-sectional area of the third flow passage.

As a result of having the above-described configuration, the bottle set of the present invention allows puncture repair to be performed in a short time.

According to an embodiment of the invention, the first breaking portion and the second breaking portion have the same structure.

According to an embodiment of the invention, the third flow passage is at least one hole having a circular cross-section, and the third flow passage has a diameter of 3 mm or smaller.

According to an embodiment of the invention, the mixing chamber aerosolizes at least a part of the mixture.

According to an embodiment of the invention, the puncture repair liquid has a viscosity of 100 mPa·s or lower at 25°C and has a viscosity of 400 mPa·s or higher at -30°C.

According to another aspect of the invention, a puncture repair kit includes the bottle set according to the invention or any of its embodiments and a compressor for supplying the compressed air.

### BRIEF DESCRIPTION OF THE DRAWINGS

FIG. 1 is a cross-sectional view conceptually showing an embodiment of a puncture repair kit of the present invention;
FIG. 2 is a cross-sectional view of the puncture repair kit in a state where a cap member is attached to a container; and
FIG. 3 is a cross-sectional view of an adapter member.

### DETAILED DESCRIPTION

Hereinafter, an embodiment of the present invention will be described in detail with reference to the drawings.

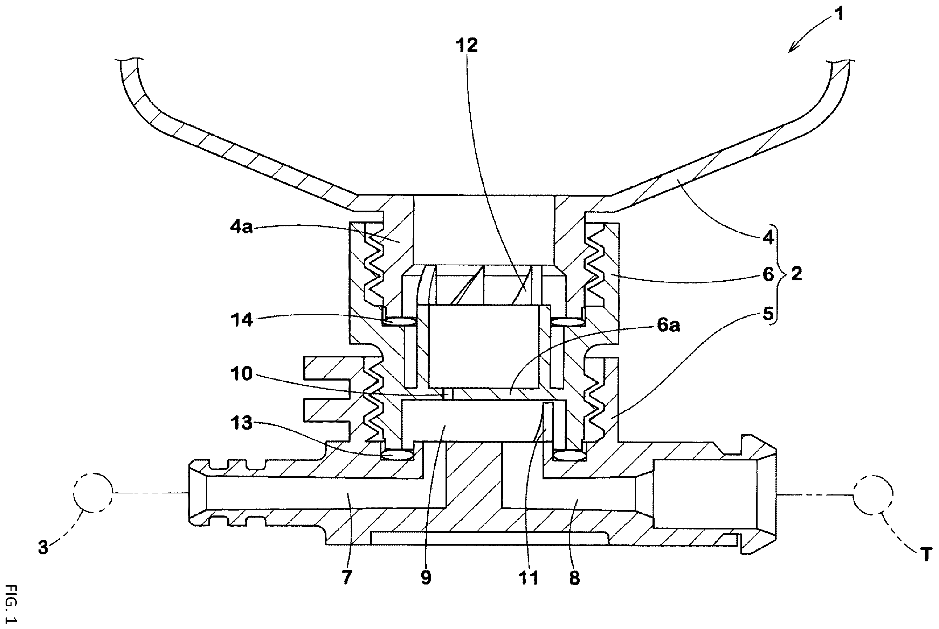

FIG. 1 is a cross-sectional view conceptually showing a puncture repair kit 1 of the present embodiment. As shown in FIG. 1, the puncture repair kit 1 is suitably used, for example, for filling an object T, such as a punctured tire, with a puncture repair liquid R and compressed air A. The puncture repair kit 1 of the present embodiment includes a bottle set 2 and a compressor 3 for supplying the compressed air A to the bottle set 2.

The bottle set 2 of the present embodiment includes a container 4 for containing the puncture repair liquid R, a cap member 5 attached to the container 4, and an adapter member 6 attachable between the container 4 and the cap member 5. Such a bottle set 2 facilitates attaching of the container 4 to the cap member 5 and the adapter member 6, and serves to shorten the time required for puncture repair.

The cap member 5 of the present embodiment has a first flow passage 7 for supplying the compressed air A, and a second flow passage 8 for discharging the puncture repair liquid R and the compressed air A. By attaching such a cap member 5 to the container 4, connecting the first flow passage 7 and the compressor 3, and connecting the second flow passage 8 and the punctured object T, the object T can be filled with the puncture repair liquid R and the compressed air A.

The adapter member 6 of the present embodiment has a mixing chamber 9 for producing a mixture of the puncture repair liquid R and the compressed air A when the adapter member 6 is attached to the cap member 5, and a third flow passage 10 for supplying the puncture repair liquid R to the mixing chamber 9. Such an adapter member 6 can produce the mixture of the puncture repair liquid R and the compressed air A in advance upstream of the second flow passage 8, and can efficiently supply the puncture repair liquid R and the compressed air A to the object T.

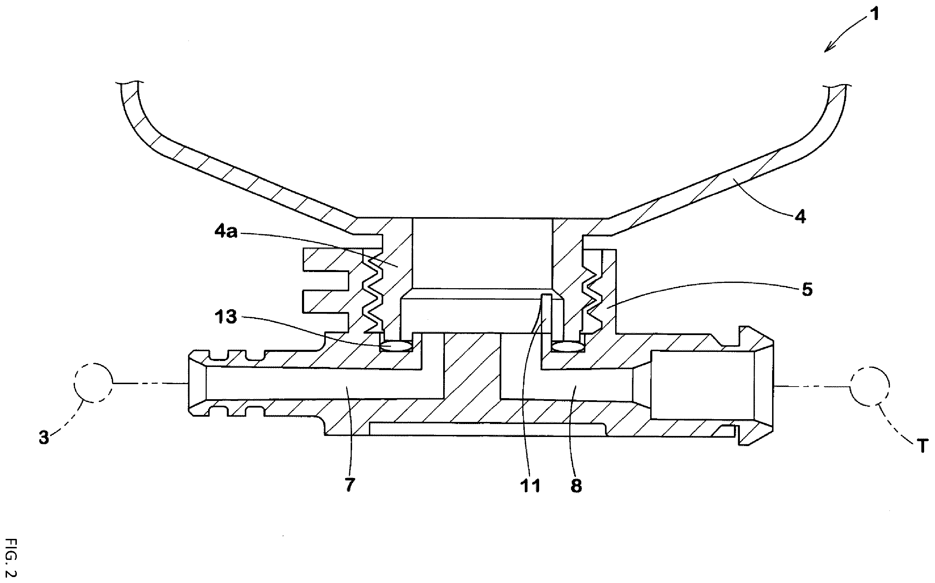

FIG. 2 is a cross-sectional view of the puncture repair kit 1 in a state where the cap member 5 is directly attached to the container 4. As shown in FIG. 2, the first flow passage 7 preferably supplies the compressed air A into the container 4 when the cap member 5 is directly attached to the container 4. Such a cap member 5 can efficiently fill the object T with the puncture repair liquid R and the compressed air A even when the outside temperature is low and a mixture cannot be produced in the mixing chamber 9.

As shown in FIG. 1, the first flow passage 7 of the present embodiment supplies the compressed air A into the mixing chamber 9 when the cap member 5 is attached to the container 4 via the adapter member 6. In such a cap member 5, the mixing chamber 9 can be repeatedly brought into a positive pressure state and a negative pressure state by pulsation of the compressed air A supplied from the compressor 3, thereby dripping the puncture repair liquid R from the third flow passage 10 into the mixing chamber 9 to produce a mixture. Therefore, the puncture repair kit 1 including the bottle set 2 of the present embodiment can efficiently supply the puncture repair liquid R and the compressed air A in accordance with the outside temperature, and allows puncture repair to be performed in a short time.

In a more preferable mode, the puncture repair liquid R has a viscosity of 100 mPa·s or lower at 25°C. Such a puncture repair liquid R is suitable to be dripped from the third flow passage 10 into the mixing chamber 9 when the mixing chamber 9 is repeatedly brought into a positive pressure state and a negative pressure state by pulsation of the compressed air A supplied from the compressor 3.

Here, in the present specification, the viscosity of the puncture repair liquid R is a value measured according to the standard of JIS K7117-1: 1999 using a B-type viscometer under the conditions of spindle LV-4 and a rotation speed of 10 rpm.

The puncture repair liquid R of the present embodiment has a viscosity of 400 mPa·s or higher at -30°C. Such a puncture repair liquid R is not suitable to be dripped from the third flow passage 10 into the mixing chamber 9, but can be injected into the object T when the cap member 5 is directly attached to the container 4.

The puncture repair liquid R preferably contains at least glycol. Examples of glycol include ethylene glycol, 1,3-propanediol, and propylene glycol. Such a puncture repair liquid R is suitable for efficiently repairing a punctured part even when injected in a small amount as a mixture into the punctured object T.

As shown in FIG. 1 and FIG. 2, the container 4 of the present embodiment includes an opening portion 4a to which the cap member 5 or the adapter member 6 is attached. The container 4 contains the puncture repair liquid R therein, for example, through the opening portion 4a. The opening portion 4a has a film (not shown) for holding the contained puncture repair liquid R in an airtight manner. Such a container 4 is sealed by the film, and thus the puncture repair liquid R can be stored therein for a long period of time without being altered.

The cap member 5 of the present embodiment has a first breaking portion 11 which breaks the film when the cap member 5 is attached to the opening portion 4a of the container 4. The first breaking portion 11 is provided, for example, near the opening of the second flow passage 8. Such a first breaking portion 11 can break the film of the opening portion 4a when the cap member 5 is directly attached to the container 4, and serves to reduce the flow path resistance in the mixing chamber 9 when the cap member 5 is attached to the adapter member 6.

The adapter member 6 of the present embodiment has a second breaking portion 12 which breaks the film when the adapter member 6 is attached to the opening portion 4a of the container 4. Such a second breaking portion 12 can break the film of the opening portion 4a when the cap member 5 is attached to the container 4 via the adapter member 6, allowing the puncture repair liquid R to be supplied to the mixing chamber 9.

The opening area of the film broken by the first breaking portion 11 is larger than a cross-sectional area of the third flow passage 10. Such a first breaking portion 11 allows the puncture repair liquid R to be discharged even when the outside temperature is low, so that the puncture repair liquid R and the compressed air A can be efficiently supplied in a low temperature environment.

The opening area of the film broken by the second breaking portion 12 is larger than the cross-sectional area of the third flow passage 10. Such a second breaking portion 12 allows the puncture repair liquid R to be supplied from the third flow passage 10 to the mixing chamber 9 without delay, so that the puncture repair liquid R and the compressed air A can be efficiently supplied.

The first breaking portion 11 and the second breaking portion 12 have, for example, the same structure. Such a first breaking portion 11 and second breaking portion 12 can break the film in the same manner, regardless of whether the cap member 5 or the adapter member 6 is attached to the opening portion 4a of the container 4.

The cap member 5 is screwed to the opening portion 4a of the container 4 or the adapter member 6, for example. The space between the cap member 5 and the opening portion 4a is preferably sealed by a first sealing member 13 when the cap member 5 is directly attached to the container 4. The first sealing member 13 of the present embodiment seals the space between the cap member 5 and the adapter member 6 when the cap member 5 is attached to the container 4 via the adapter member 6. Such a cap member 5 is easily attached to the container 4 and also has excellent airtightness after being attached.

The adapter member 6 is screwed to both the opening portion 4a of the container 4 and the cap member 5, for example. The space between the adapter member 6 and the opening portion 4a is preferably sealed by a second sealing member 14. As described above, the space between the adapter member 6 and the cap member 5 of the present embodiment is sealed by the first sealing member 13. Such an adapter member 6 is easily attached to the container 4 and to the cap member 5, and also has excellent airtightness after being attached.

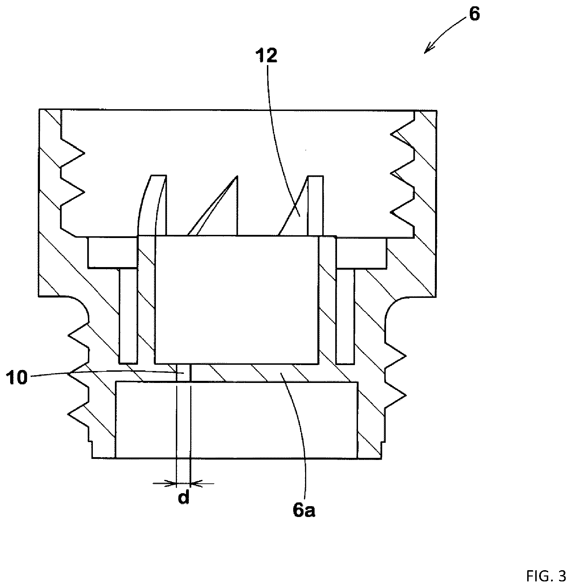

FIG. 3 is a cross-sectional view of the adapter member 6. As shown in FIG. 1 to FIG. 3, the adapter member 6 includes, for example, a separation wall 6a for defining the mixing chamber 9 which is formed when the adapter member 6 is attached to the cap member 5. The third flow passage 10 is at least one hole, in the present embodiment, three holes, formed in the separation wall 6a and having a circular cross-section. Such a third flow passage 10 is suitable for dripping the puncture repair liquid R into the mixing chamber 9.

As shown in FIG. 3, a diameter d of the third flow passage 10 is preferably not greater than 3 mm. When the diameter d of the third flow passage 10 is not greater than 3 mm, the puncture repair liquid R dripped into the mixing chamber 9 can be reduced in size, which serves to efficiently mix the puncture repair liquid R and the compressed air A in the mixing chamber 9.

As shown in FIG. 1, the mixing chamber 9 of the present embodiment aerosolizes at least a part of the mixture. Such a mixing chamber 9 can efficiently mix the puncture repair liquid R and the compressed air A. Accordingly, the mixture can be supplied with at least a part of the puncture repair liquid R as aerosol particles of about 1 to 100 µm. Therefore, the puncture repair kit 1 of the present embodiment allows a punctured part to be efficiently repaired with a small amount of the puncture repair liquid R, and even if the object T is a tire in which a sound absorbing material, a sensor, etc., are placed, the puncture repair kit 1 can reduce the influence on the sound absorbing material, the sensor, etc.

Although the particularly preferred embodiment of the present invention has been described in detail above, the present invention is not limited to the above-described embodiment, and various modifications can be made to implement the present invention within the scope of the appended claims.

## Claims

1. A bottle set (2) used for filling a punctured object (T) with a puncture repair liquid (R) and compressed air (A), the bottle set (2) comprising:
a container (4) for containing the puncture repair liquid (R); and
a cap member (5) attached to the container (4),
wherein the cap member (5) has a first flow passage (7) for supplying the compressed air (A), and a second flow passage (8) for discharging the puncture repair liquid (R) and the compressed air (A),
**characterized in that**
the bottle set (2) further comprises an adapter member (6) attachable between the container (4) and the cap member (5),
wherein
the adapter member (6) has a mixing chamber (9) for producing a mixture of the puncture repair liquid (R) and the compressed air (A) when the adapter member (6) is attached to the cap member (5), and a third flow passage (10) for supplying the puncture repair liquid (R) to the mixing chamber (9),
the first flow passage (7) supplies the compressed air (A) into the container (4) when the cap member (5) is directly attached to the container (4), and supplies the compressed air (A) into the mixing chamber (9) when the cap member (5) is attached to the container (4) via the adapter member (6),
the container (4) includes an opening portion (4a) to which the cap member (5) or the adapter member (6) is attached,
the opening portion (4a) has a film for holding the puncture repair liquid (R) in an airtight manner,
the cap member (5) has a first breaking portion (11) which breaks the film when the cap member (5) is attached to the opening portion (4a),
the adapter member (6) has a second breaking portion (12) which breaks the film when the adapter member (6) is attached to the opening portion (4a), and
an opening area of the film broken by the first breaking portion (11) or the second breaking portion (12) is larger than a cross-sectional area of the third flow passage (10).

2. The bottle set (2) according to claim 1, wherein the first breaking portion (11) and the second breaking portion (12) have the same structure.

3. The bottle set (2) according to claim 1 or 2, wherein
the third flow passage (10) is at least one hole having a circular cross-section, and
the third flow passage (10) has a diameter (d) of 3 mm or smaller.

4. The bottle set (2) according to any one of claims 1 to 3, wherein the mixing chamber (9) aerosolizes at least a part of the mixture.

5. The bottle set (2) according to any one of claims 1 to 4, wherein the puncture repair liquid (R) has a viscosity of 100 mPa·s or lower at 25°C and has a viscosity of 400 mPa·s or higher at -30°C.

6. A puncture repair kit (1) comprising:
the bottle set (2) according to any one of claims 1 to 5; and
a compressor (3) for supplying the compressed air (A).

## Patentansprüche

1. Flaschensatz (2), der zum Befüllen eines durchstochenen Gegenstands (T) mit einer Lochreparaturflüssigkeit (R) und Druckluft (A) verwendet wird, wobei der Flaschensatz (2) umfasst:
einen Behälter (4) zum Aufnehmen der Lochreparaturflüssigkeit (R);
und
ein Deckelelement (5), das an dem Behälter (4) angebracht ist,
wobei das Deckelelement (5) einen ersten Strömungskanal (7) zum Zuführen der Druckluft (A) und einen zweiten Strömungskanal (8) zum Austragen der Lochreparaturflüssigkeit (R) und der Druckluft (A) aufweist,
**dadurch gekennzeichnet, dass**
der Flaschensatz (2) ferner ein Adapterelement (6) umfasst, das zwischen dem Behälter (4) und dem Deckelelement (5) anbringbar ist,
wobei
das Adapterelement (6) eine Mischkammer (9) zum Erzeugen einer Mischung aus der Lochreparaturflüssigkeit (R) und der Druckluft (A), wenn das Adapterelement (6) an dem Deckelelement (5) angebracht ist, und einen dritten Strömungskanal (10) zum Zuführen der Lochreparaturflüssigkeit (R) zu der Mischkammer (9) aufweist,
der erste Strömungskanal (7) die Druckluft (A) in den Behälter (4) zuführt, wenn das Deckelelement (5) direkt an dem Behälter (4) angebracht ist, und die Druckluft (A) in die Mischkammer (9) zuführt, wenn das Deckelelement (5) über das Adapterelement (6) an dem Behälter (4) angebracht ist,
der Behälter (4) einen Öffnungsabschnitt (4a) aufweist, an dem das Deckelelement (5) oder das Adapterelement (6) angebracht ist,
der Öffnungsabschnitt (4a) einen Film zum luftdichten Halten der Lochreparaturflüssigkeit (R) aufweist,
das Deckelelement (5) einen ersten Brechabschnitt (11) aufweist, der den Film bricht, wenn das Deckelelement (5) an dem Öffnungsabschnitt (4a) angebracht ist,
das Adapterelement (6) einen zweiten Brechabschnitt (12) aufweist, der den Film bricht, wenn das Adapterelement (6) an dem Öffnungsabschnitt (4a) angebracht ist, und
eine Öffnungsfläche des durch den ersten Brechabschnitt (11) oder den zweiten Brechabschnitt (12) gebrochenen Films größer als eine Querschnittsfläche des dritten Strömungskanals (10) ist.

2. Flaschensatz (2) nach Anspruch 1, wobei der erste Brechabschnitt (11) und der zweite Brechabschnitt (12) den gleichen Aufbau aufweisen.

3. Flaschensatz (2) nach Anspruch 1 oder 2, wobei
der dritte Strömungskanal (10) mindestens ein Loch mit einem kreisförmigen Querschnitt ist, und
der dritte Strömungskanal (10) einen Durchmesser (d) von 3 mm oder weniger aufweist.

4. Flaschensatz (2) nach einem der Ansprüche 1 bis 3, wobei die Mischkammer (9) mindestens einen Teil der Mischung aerosolisiert.

5. Flaschensatz (2) nach einem der Ansprüche 1 bis 4, wobei die Lochreparaturflüssigkeit (R) eine Viskosität von 100 mPa·s oder weniger bei 25 °C aufweist und eine Viskosität von 400 mPa·s oder höher bei -30 °C aufweist.

6. Lochreparaturkit (1), umfassend:
den Flaschensatz (2) nach einem der Ansprüche 1 bis 5; und
einen Kompressor (3) zum Zuführen der Druckluft (A).

## Revendications

1. Ensemble bouteille (2) utilisé pour remplir un objet crevé (T) avec un liquide de réparation de crevaison (R) et de l'air comprimé (A), l'ensemble bouteille (2) comprenant :
un contenant (4) destiné à contenir le liquide de réparation de crevaison (R) ; et
un élément formant capuchon (5) attaché au contenant (4),
dans lequel l'élément formant capuchon (5) a un premier passage d'écoulement (7) destiné à fournir l'air comprimé (A), et un deuxième passage d'écoulement (8) destiné à décharger le liquide de réparation de crevaison (R) et l'air comprimé (A),
**caractérisé en ce que**
l'ensemble bouteille (2) comprend en outre un élément adaptateur (6) pouvant être attaché entre le contenant (4) et l'élément formant capuchon (5),
dans lequel
l'élément adaptateur (6) a une chambre de mélange (9) destinée à produire un mélange du liquide de réparation de crevaison (R) et de l'air comprimé (A) quand l'élément adaptateur (6) est attaché à l'élément formant capuchon (5), et un troisième passage d'écoulement (10) destiné à fournir le liquide de réparation de crevaison (R) à la chambre de mélange (9),
le premier passage d'écoulement (7) fournit l'air comprimé (A) jusque dans le contenant (4) quand l'élément formant capuchon (5) est attaché directement au contenant (4), et fournit l'air comprimé (A) jusque dans la chambre de mélange (9) quand l'élément formant capuchon (5) est attaché au contenant (4) via l'élément adaptateur (6),
le contenant (4) inclut une portion d'ouverture (4a) à laquelle l'élément formant capuchon (5) ou l'élément adaptateur (6) est attaché,
la portion d'ouverture (4a) a un film destiné à contenir le liquide de réparation de crevaison (R) d'une manière étanche à l'air,
l'élément formant capuchon (5) a une première portion de rupture (11) qui rompt le film quand l'élément formant capuchon (5) est attaché à la portion d'ouverture (4a),
l'élément adaptateur (6) a une deuxième portion de rupture (12) qui rompt le film quand l'élément adaptateur (6) est attaché à la portion d'ouverture (4a), et
une aire d'ouverture du film rompu par la première portion de rupture (11) ou par la deuxième portion de rupture (12) est supérieure à une aire en section transversale du troisième passage d'écoulement (10).

2. Ensemble bouteille (2) selon la revendication 1, dans lequel la première portion de rupture (11) et la deuxième portion de rupture (12) ont la même structure.

3. Ensemble bouteille (2) selon la revendication 1 ou 2, dans lequel
le troisième passage d'écoulement (10) est au moins un trou ayant une section transversale circulaire, et
le troisième passage d'écoulement (10) a un diamètre (d) de 3 mm ou moins.

4. Ensemble bouteille (2) selon l'une quelconque des revendications 1 à 3, dans lequel la chambre de mélange (9) aérosolise au moins une partie du mélange.

5. Ensemble bouteille (2) selon l'une quelconque des revendications 1 à 4, dans lequel le liquide de réparation de crevaison (R) a une viscosité de 100 mPa·s ou moins à 25 °C et a une viscosité de 400 mPa·s ou plus à -30 °C.

6. Kit de réparation de crevaison (1) comprenant :
l'ensemble bouteille (2) selon l'une quelconque des revendications 1 à 5 ; et
un compresseur (3) destiné à fournir de l'air comprimé (A).
